# NEUE EUROPÄISCHE PATENTSCHRIFT

(11) **EP 1 729 960 B2**
(45) Veröffentlichungstag und Bekanntmachung des Hinweises auf die Entscheidung über den Einspruch: **24.10.2012**
(45) Hinweis auf die Patenterteilung: 21.05.2008
(21) Anmeldenummer: 05716205.9
(22) Anmeldetag: 18.03.2005
(51) Int. Cl.: B32B 27/06, B32B 7/14, B32B 27/08, B65D 65/40

(54) **WICKELBARE FOLIE ZUR HERSTELLUNG EINER VERPACKUNG**
WINDABLE FILM FOR THE PRODUCTION OF A PACKAGING
FILM ENROULABLE SERVANT A FORMER UN EMBALLAGE

(30) Priorität: 02.04.2004 DE 102004016370; 24.12.2004 DE 102004062600
(43) Veröffentlichungstag der Anmeldung: 13.12.2006
(73) Patentinhaber: Huhtamaki Ronsberg, Zweigniederlassung der Huhtamaki Deutschland GmbH & Co. KG, 87671 Ronsberg/Allgäu (DE)
(72) Erfinder: MICHALSKY, Andreas, 87766 Memmingerberg (DE)
(74) Vertreter: Trossin, Hans-Jürgen
(86) Internationale Anmeldenummer: PCT/EP2005/002916
(87) Internationale Veröffentlichungsnummer: WO 2005/097489

(56) Entgegenhaltungen:
- EP-A- 0 870 695
- EP-A- 0 891 930
- EP-A- 1 361 168
- DE-C1- 4 319 023
- GB-A- 1 395 181
- US-B1- 6 374 583

## Beschreibung

Die Erfindung betrifft eine wickelbare Folie zur Herstellung einer Verpackung gemäß dem Oberbegriff des Patentanspruchs 1 oder des Patentansprüchs 2.

Folien, die zur Herstellung einer Verpackung verwendet werden, sind üblicherweise in Form von Zuschnitten verfügbar, die entweder als solche gefertigt oder von einer Folienbahn abtrennbar sind. Letztere Variante, nämlich die Zurverfügungstellung einer, in aller Regel auf einer Rolle, aufgewickelten Folie, weist hierbei gegenüber der ersten Alternative zahlreiche Vorteile auf, die vor allem in einer effektiven und effizienten Herstellbarkeit einer Folienbahn sowie einer verbesserten Handhabbarkeit einer solchen Folienbahn für eine spätere Weiterverarbeitung begründet sind.

Um aus einer Folie eine Verpackung herstellen zu können, ist es notwendig, daß die Follenbahn zunächst in vorbestimmte Abschnitte von Folienzuschnitten unterteilt wird. Im Anschluß daran werden Tellbereiche, insbesondere Ränder, der Zuschnitte miteln- ander in Kontakt gebracht und verbunden, um auf diese Weise eine geschlossene Verpackung zu bilden. Um die Verbindbarkeit der gewünschten Folienabschnitte zu erleichtern, wird vielfach eine Siegeltechnik verwendet, die es gestattet, eine problemlose und einfache Versiegelung der gewünschten Folienabschnitte durchzuführen. Hierzu wird beispielsweise eine Klebesiegelung angewandt.

Als problematisch hat sich hierbei jedoch erwiesen, daß Folienbahnen, die für eine solche Versiegelung vorbereitet worden sind, zu einem lagenweisen miteinander. Verkleben bzw. miteinander Verblocken neigen, sobald sie aufeinander gelegt oder, bevorzugt, auf eine Rolle gewickelt werden. Diese Gefahr des Verblockens verstärkt sich noch weiter durch eine erhöhte Umgebungstemperatur, wobei die Verblockung derart stark sein kann, daß die auf die Rolle aufgewickelte Folienbahn nicht mehr abrollbar und somit unbrauchbar ist.

Einer der Hauptgründe für das Auftreten dieser Problematik besteht in der Notwendigkeit einer innen-außen-Siegelbarkeit des aus der Folienbahn hergestellten Folienzuschnitts, was In der Praxis bedeutet, daß eine Folienoberseite mit einer Folienunterseite versiegelt wird. Diese Konstellation von Ober- und Unterseiten ist jedoch bei einer aufgewickelten Folie zwangsläufig gegeben, was beim Stand der Technik häufig In einem vorzeitigen und unerwünschten "Versiegeln" auf der Rolle resultiert.

EP1361168, (HUHTAMAKI) und EP891930, (ALUSUISSE) offenbaren nur einen längsförmigen Kaltsiegelkleber auf nur einer Seite einer Folie, nicht jedoch zwei verschiedene Siegelmaterialien.

GB1395181 offenbart verschiedene Adhäsionskräfte, jedoch an Beuteln oder Umschlagen und ist somit nicht wickelbar.

EP870695, (PECHINEY EMBALLAGE) benutzt einen Kaltsiegelkleber und einen Anti-Adhäsionslack. Verschiedene Adhäsionskräfte werden nicht gelehrt, der Film ist wickelbar.

DE-C1-4319023 betrifft ein beidseitig selbstklebendes Band, wobei die verschiedenen Klebekräfte - auf den gegenüberliegenden Seiten - durch verschiedene Silikonsierungen erreicht werden.

Eine gattungsgemäße wickelbare Folie ist aus der EP-A-994039 bekannt. Diese zeigt eine Folie mit Kaltsiegelbereichen unterschiedlicher Adhäsionseigenschaften, die auf einer Seite der Folie aufgetragen sind. Dabei sind allerdings jene Siegelbereiche, die nur gegen sich selbst siegeln, mit geringerer Dicke ausgeführt als jene Siegelbereiche, die auch gegen eine Oberfläche der Folie siegeln.

Aus der US 6374583 B1 ist eine Wickelfolie bekannt, auf deren einer Folienseite in jedem Folienbahnrandbereich je eine ein Kaltsiegelbereich in Folienbahnlängsrichtung parallel zum Folienbahnrand verläuft. Der Folienbereich zwischen den Kaltsiegelbereichen zeigt in Folienbahnquerrichtung verlaufende streifenförmige Heißklebebereiche.

Aus der nachveröffentlichten EP-A-1574329 ist eine Verpackungsfolie bekannt, die aus mehreren Schichten aufgebaut ist. Eine Folienseite trägt dabei sowohl eine Heißsiegelschicht als auch eine gegenüber dieser erhabene Kaltsiegelschicht. Über die Gestalt des Auftrags der Siegelschichten auf der Folienseite enthält die Druckschrift keine weiteren Informationen.

Die Aufgabe der Erfindung besteht darin, eine kostengünstige Folie mit verbesserter Handhabbarkeit zur Verfügung zu stellen, mittels derer die vorgenannte Problematik, insbesondere beim Aufrollen und auch unter erhöhten Temperaturen vermieden bzw. behoben wird.

Diese Aufgabe wird gemäß einem ersten Aspekt des vorliegenden Erfindung durch eine wickelbare Folie zur Herstellung einer Verpackung gemäß Patentanspruch 1 gelöst.

Gemäß einem zweiten Gesuchtspunkt des vorliegenden Erfindung wird die genannte Aufgabe auch durch eine wickelbare Folie mit allen Merkmalen des Anspruchs 2 gelöst.

Insbesondere wird die Aufgabe durch eine wickelbare Folie zur Herstellung einer Verpackung, vorzugsweise für Lebensmittel, mit zumindest in Teilabschnitten der Folie vorgesehenen Siegelbereichen gelöst, wobei die Folie mehrschichtig ausgebildet und/oder mit Farben, insbesondere Lacken, beispielsweise "Struktur"-Lacken, versehen ist und die Siegelbereiche einer Folienseite unterschiedliche Adhäsionseigenschaften aufweisen.

Ein wesentlicher Punkt der Erfindung liegt darin, daß die Siegelbereiche auf einer Folienseite hinsichtlich ihrer Adhäsionseigenschaften so aufeinander abgestimmt sind, daß eine flächige Versiegelung einer Oberseite einer Folienbahn mit einer darüber liegenden Unterseite einer weiteren Folienbahn minimiert bzw. ganz vermieden wird.

Erfindungsgemäß sind die Siegelbereiche mit unterchiedlichen Adhäsionseigenschaften durch erste, gegen sich selbst außen-außen siegelbare Siegelbereiche, und durch zweite, innen-außen siegelbare Siegelbereiche definiert.

Die ersten, also die außen-außen siegelbaren Siegelbereiche sind im wesentlichen entlang der Längserstreckung der Folie angeordnet und weisen eine im Vergleich zu den zweiten Siegelbereichen größere Flächendeckung auf und sind nicht gegen die Innenseite der Folie blockend. Durch die größere und linienförmige Anordnung in Laufrichtung baut sich in diesen Bereichen ein gröBerer Wickeldruck auf als in den übrigen Bereichen der Folie.

Die zweiten Siegelbereiche befinden sich erfindungsgemäß in einem Bereich der Folie, in dem sie sich nicht mit den ersten Siegelbereichen überlappen. Dies gilt insbesondere auch dann, wenn die Folie, die bevorzugt als Folienbahn ausgeführt ist, auf einer Rolle aufgerollt bzw. gewickelt ist. In diesem Fall überlappen sich die zweiten Siegelbereiche ebenfalls über den Querschnitt der Rolle gesehen nicht mit den ersten Siegelbereichen, so daß durch die zweiten Siegelbereiche kein Dickenaufbau gegenüber der verbleibenden Folienfläche auf der Rolle stattfindet.

Erfindungsgemäß beträgt die Flächendeckung der zweiten Siegelbereiche bezüglich der Gesamtfläche der Folie weniger als 5 %, vorzugsweise weniger als 3,8 % und besonders bevorzugt weniger als 2,5 %. Auf diese Weise ist gewährleistet, daß die auf der Folie angebrachten zweiten Siegelbereiche, die innen-außen siegelbar sind und zu einem Verkleben von aufgewickelten Folienbahnen führen könnten, nur sehr klein ausgebildet sind, so daß die Gefahr einer flächigen Verblockung minimiert bzw. ausgeschaltet ist.

Des weiteren weisen die ersten Siegelbereiche erfindungsgemäß eine größere Dicke auf als die zweiten Siegelbereiche, was in einfacher Weise durch eine unterschiedliche Auftragsmenge eines Siegelmediums realisierbar ist. Alternativ und/oder ergänzend kann die Flächendeckung der ersten Siegelbereiche deutlich, d. h. um einen Faktor von 3 bis 30 mal, größer ausgebildet sein als diejenige der zweiten Siegelbereiche.

Aufgrund der größeren Dicke und/oder der wesentlich größeren Flächendeckung der ernsten Siegelbereiche gegenüber derjenigen der zweiten Siegelbereiche findet beim Aufrollen der Folienbahn ein Dickenaufbau in dem Bereich der im wesentlichen linear entlang der Längserstreckung der Folie verlaufenden ersten Siegelbereiche statt. Es sei an dieser Stelle betont, daß die ersten Siegelbereiche auch kurven- oder punkt- bzw. fleckenförmig entlang der Längserstreckung der Folienbahn angeordnet und im übrigen je nach benötigter Siegelfläche gestaltet sein können. Das wesentliche einzuhaltende erfindungsgemäße Merkmal besteht darin, daß die ersten Siegelbereiche beim Aufwickeln der Folienbahn übereinander zu liegen kommen und ein die Folienbahn in Querrichtung tragendes Hauptprofil bilden.

Da die zweiten Siegelbereiche eine geringere Dicke und/oder wesentlich geringere Flächendeckung als die ersten Siegelbereiche aufweisen, dient die Differenz der Dicke der ersten Siegelbereiche zu den zweiten Siegelbereichen beim Aufwickeln der Folienbahn quasi als Abstandshalter, so daß die Oberseite einer unteren Folienbahn nicht bzw. nur mit einem deutlich reduzierten Flächendruck in eine unmittelbare Anlage mit der Unterseite einer oberen Folienbahn kommt und somit kein ungewolltes Verkleben dieser beiden Folienlagen miteinander erfolgen kann. Es sei angemerkt, daß selbst für den Fall, daß die Oberseite einer unteren Folienbahn mit der Unterseite einer oberen Folienbahn in Kontakt kommt, aufgrund der vergrößerten Dicke des Hauptprofils ein festes Verkleben der beiden Lagen außer acht bleibt, da auf die zweiten Siegelbereiche aufgrund der verringerten Dicke in der Rolle kein Wickeldruck wirkt und die zweiten Siegelbereiche somit entlastet sind.

Die zweiten Siegelbereiche erstrecken sich erfindungsgemäß im wesentlichen in Querrichtung, d.h. im rechten Winkel oder schräg zur Folienlängserstreckung. Die zweiten Siegelbereiche sind hierbei im wesentlichen linear ausgebildet, wobei hiermit lediglich die generelle Ausrichtung der.zweiten Siegelbereiche gemeint ist. Prinzipiell können diese zweiten Siegelbereiche auch wellen-, zickzack- oder punktförmig sein und sich in sonstiger Weise quer zur Follehlängserstreckung ausdehnen.

Durch diese im wesentlichen linienförmige Ausbildung der zweiten Siegelbereiche kommen diese bei einem Aufwickeln der Folie aufgrund des zunehmenden Durchmessers der Rolle beim Aufwickeln an radial und umfänglich unterschiedlichen Orten zu liegen, so daß ein Dickenaufbau durch ein Übereinanderliegen der zweiten Siegelbereiche und eine damit einhergehende Wickel pressung, die auf die zweiten Siegelbereiche wirken würde, erfindungsgemäß nicht vorkommt.

Insofern besteht ein wesentlicher Aspekt der Erfindung darin, die innen-außen spiegelbaren zweiten Siegelbereiche durch eine Beabstandung der die zweiten Siegelbereiche aufweisenden Folienbahnen voneinander zu trennen. Dies wird durch die größere Dicke der ersten Siegelbereiche gegenüber derjenigen der zweiten Siegelbereiche bewirkt.

Somit ist das die Rolle tragende Hauptprofil, das aus den ersten Siegelbereichen in gerolltem Zustand gebildet wird, nicht blockend mit einem außen-außen siegelbaren Material versehen, während die zweiten Siegelbereiche mit einer maximalen Flächendeckung von 5 % innen-außen siegelbar sind, aber unregelmäßig über den Rollenumfang druckfrei übereinander angeordnet sind.

Bei den Materialien, die erfindungsgemäß verwendet werden, handelt es sich vorwiegend um orientierte Polypropylen- und Polyethylenfolien.

Die erfindungsgemäße Folie wird in vorteilhafter Weise als Frontaldruck- bzw. Schöndruckfolie ausgebildet, wobei nur die Frontseite der Folie bedruckt wird. An dieser Stelle sollte erwähnt werden, dass das Druck- bzw. Beschichtungsverfahren sowie dessen prinzipieller Aufbau auch auf der Innenseite bzw. einer Unterseite einer Folie anwendbar ist. Des weiteren sei angemerkt, daß die Folie vorzugsweise als Laminat ausgebildet ist, wobei einzelne Laminatschichten auch Druck- bzw. Siegelschichten sein können.

Weitere Ausführungsformen der Erfindung ergeben sich aus den Unteransprüchen. Nachfolgend wird die Erfindung anhand eines Ausführungsbeispiels beschrieben, das anhand einer Abbildung näher erläutert wird. Hierbei zeigt:

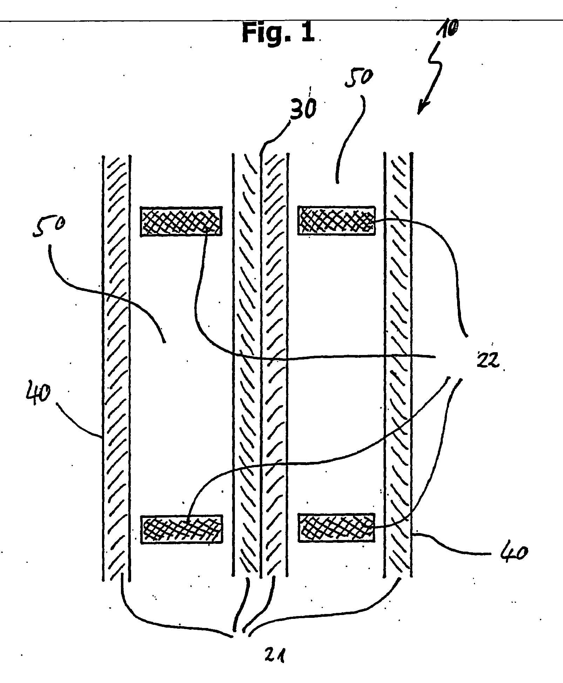

- Fig. 1: eine schematische Darstellung einer erfindungsgemäßen wickelbaren Folie gemäß einem Ausführungsbeispiel.

In der nachfolgenden Beschreibung werden für gleiche und gleichwirkende Teile dieselben Bezugsziffern verwendet.

Fig. 1 zeigt eine wickelbare Folie 10, die entlang ihrer oben-unten-Darstellung ihre Längserstreckung zeigt. Die Folie ist als zueinander symmetrische Doppelfolie für eine simultane Herstellung von jeweils zwei Verpackungen ausgebildet, die entlang ihrer Mittellinie in zwei gleiche Folien unterteilt werden kann, die anschließend zuschneidbar sind. Entlang der Längserstreckung weist die Folie 10 sowohl beidseits der Mittellinie 30 als auch an ihren Seitenrändern 40 erste Siegelbereiche 21 auf. Rechtwinklig zu diesen ersten Siegelbereichen 21 erstrecken sich linienförmige zweite Siegelbereiche 22. Die ersten Siegelbereiche 21 weisen eine größere Auftragsmenge an siegelbarem Dispersionslack und somit eine größere Höhenerstreckung aus der Bildebene heraus auf, als die zweiten Siegelbereiche 22, so daß bei einem Aufwickeln der Folie 10 auf einer Rolle (nicht gezeigt) ein Hauptprofil von übereinander liegenden ersten Siegelbereichen 21 gebildet wird und die zwischen den ersten Siegelbereichen liegende Folie 50 etwas beabstandet hinsichtlich benachbarter darunterliegender Folienbahnlagen angeordnet ist. Dies gilt ebenso für die zweiten Siegelbereiche 22.

Zusammenfassend sei erwähnt, daß aufgrund der beabstandeten Anordnung der Folienbereiche zwischen den ersten Siegelbereichen in aufgewickeltem Zustand ein Verkleben dieser Bereiche 50 vermieden wird. Dies gilt insbesondere auch bei erhöhten Temperaturen, durch die herkömmliche Folienbahnen unbrauchbar würden.

An dieser Steile sei darauf hingewiesen, daß alle oben beschriebenen Teile für sich alleine gesehen und in jeder Kombination, insbesondere die in der Zeichnung dargestellten Details, als erfindungswesentlich beansprucht werden. Abänderungen hiervon sind dem Fachmann geläufig.

### Bezugszeichenliste

- 10: Folie
- 21: erste Siegelbereiche
- 22: zweite Siegelbereiche
- 30: Mittellinie
- 40: Seitenrand
- 50: Bereiche zwischen ersten Siegelbereichen

## Patentansprüche

1. Wickelbare Folie (10) zur Herstellung einer Verpackung, vorzugsweise für Lebensmittel, mit zumindest in Teilabschnitten der Folie vorgesehenen Siegelbereichen (21, 22),
wobei
die Folie (10) mehrschichtig als Folienbahn ausgebildet ist und die Siegelbereiche (21, 22) einer Folienseite unterschiedliche Adhäsionseigenschaften aufweisen, wobei genauer
die Siegelbereiche (21, 22) mit unterschiedlichen Adhäsionseigenschaften durch erste, gegen sich selbst außen-außen siegelbare und nicht gegen die Innenseite blockende Siegelbereiche (21) und durch zweite, innen-außen siegelbare Siegelbereiche (22) definiert sind,
**dadurch gekennzeichnet, dass**
die ersten Siegelbereiche (21) eine größere Dicke aufweisen als die zweiten Siegelbereiche (22) und derart auf der Folienseite angeordnet sind,
dass sie beim Aufwickeln der Folienbahn übereinander zu liegen kommen und ein die Folienbahn in Querrichtung tragendes Hauptprofil bilden, so dass im aufgewickelten Zustand der Folienbahn die Oberseite einer unteren Folienbahnwindung im Bereich von die zweiten Siegelbereiche (22) aufweisenden Folienbahnabschnitten nicht oder nur mit einem deutlich reduzierten Flächendruck in eine unmittelbare Anlage mit der Unterseite einer oberen Folienbahnwicklung gelangt.

2. Wickelbare Folie (10) zur Herstellung einer Verpackung, vorzugsweise für Lebensmittel, mit zumindest in Teilabschnitten der Folie vorgesehenen Siegelbereichen (21, 22),
wobei
die Folie (10) mehrschichtig als Folienbahn ausgebildet ist und die Siegelbereiche (21, 22) einer Folienseite unterschiedliche Adhäsionseigenschaften aufweisen,
wobei genauer
die Siegelbereiche (21, 22) mit unterschiedlichen Adhäsionseigenschaften durch erste, gegen sich selbst außen-außen siegelbare und nicht gegen die Innenseite blockende Siegelbereiche (21) und durch zweite, innen-außen siegelbare Siegelbereiche (22) definiert sind,
**dadurch gekennzeichnet, dass**
die ersten Siegelbereiche (21) eine größere Flächendeckung aufweisen als die zweiten Siegelbereiche (22), wobei die ersten Siegelbereiche (21) einen Dispersionslack auf Acrylat-Basis aufweisen, oder/und die zweiten Siegelbereiche (22) einen Dispersionslack auf Ethyl-Vinyl-Acetat-Basis aufweisen.

3. Folie nach Anspruch 1 oder 2,
**dadurch gekennzeichnet, dass**
die ersten Siegelbereiche (21) im Wesentlichen entlang der Längsstreckung der Folie (10), insbesondere der Folienbahn, und die zweiten Siegelbereiche (22) sich in einem, insbesondere in gerolltem Zustand über den Querschnitt der Rolle, mit den ersten Siegelbereichen (21) nicht überlappenden Bereich der Folie (10) angeordnet sind.

4. Folie nach einem der Ansprüche 1 oder 3, wenn rückbezogen nach Anspruch 1,
**dadurch gekennzeichnet, dass**
die ersten Siegelbereiche (21) einen Dispersionslack, insbesondere auf Acrylat-Basis, aufweisen.

5. Folie nach einem der Ansprüche 1 oder 3, wenn rückbezogen nach Anspruch 1,
**dadurch gekennzeichnet, dass**
die zweiten Siegelbereiche (22) einen Dispersionslack, insbesondere auf Ethyl-Vinyl-Acetat-Basis aufweisen.

6. Folie nach einem der Ansprüche 1 oder 3 bis 5, wenn rückbezogen nach Anspruch 1,
**dadurch gekennzeichnet, dass**
die ersten Siegelbereiche (21) eine größere Flächendeckung aufweisen als die zweiten Siegelbereiche (22)

7. Folie nach einem der vorhergehenden Ansprüche,
**dadurch gekennzeichnet, dass**
die ersten Siegelbereiche (21) zur Vermeidung einer innen-außen Siegelung mit Farbe, Lack, insbesondere Strukturlack, und/oder Dehäsionsmittel versehen sind.

8. Folie nach einem der Ansprüche 1 bis 7,
**dadurch gekennzeichnet, dass**
die zweiten Siegelbereiche (22) bezüglich der Gesamtfläche der Folie (10) eine Flächendeckung von weniger als 5 %, vorzugsweise weniger als 3,8 % und besonders bevorzugt weniger als 2,5 % ausweisen.

9. Folie nach einem der vorhergehenden Ansprüch,
**dadurch gekennzeichnet, dass**
die zweiten Siegelbereiche (22) selektiv nur innen-außen siegeln.

## Claims

1. Windable film (10) for the production of a packaging, preferably for food, comprising sealing regions (21, 22) at least in portions of the film, wherein the film (10) is formed in multiple layers as a film web and the sealing regions (21, 22) on one side of the film exhibit different adhesive properties, wherein more precisely the sealing regions (21, 22) exhibiting different adhesive properties are defined by first self-opposing outer-outer sealable sealing regions (21) which do not block against the inner side and by second inner-outer sealable sealing regions (22), **characterised in that** the first sealing regions (21) have a greater thickness than the second sealing regions (22) and are arranged on the side of the film in such a way that when the film web is being wound they overlap and form a main profile which carries the film web in the transverse direction, such that when the film web is wound, the upper side of a lower turn of the film web in the region of the portions of the film web which comprise second sealing regions (22) does not make direct contact with the lower side of an upper winding of the film web.

2. Windable film (10) for the production of a packaging, preferably for food, comprising sealing regions (21, 22) at least in portions of the film, wherein the film (10) is formed in multiple layers as a film web and the sealing regions (21, 22) on one side of the film exhibit different adhesive properties, wherein more precisely the sealing regions (21, 22) exhibiting different adhesive properties are defined by first self-opposing outer-outer sealable sealing regions (21) which do not block against the inner side and by second inner-outer sealable sealing regions (22), **characterised in that** the first sealing regions (21) have a greater area coverage than the second sealing regions (22), wherein the first sealing regions (21) have an emulsion paint based on acrylate and/or the second sealing regions (22) have an emulsion paint based on ethyl vinyl acetate.

3. Film according to either claim 1 or claim 2, **characterised in that** the first sealing regions (21) are arranged substantially along the longitudinal extension of the film (10), in particular of the film web, and the second sealing regions (22) are arranged in a region of the film (10) over the cross-section of the roll which does not overlap the first sealing regions (21), in particular when rolled up.

4. Film according to either claim 1 or claim 3, when dependent on claim 1, **characterised in that** the first sealing regions (21) comprise an emulsion paint, in particular based on acrylate.

5. Film according to either claim 1 or claim 3, when dependent on claim 1, **characterised in that** the second sealing regions (22) comprise an emulsion paint, in particular based on ethyl vinyl acetate.

6. Film according to either claim 1 or claims 3 to 5, when dependent on claim 1, **characterised in that** the first sealing regions (21) have a greater area coverage than the second sealing regions (22).

7. Film according to any of the preceding claims, **characterised in that** the first sealing regions (21) are provided with paint, varnish, in particular textured paint, and/or a release agent in order to prevent inner-outer sealing.

8. Film according to any of claims 1 to 7, **characterised in that** the second sealing regions (22) have an area coverage of less than 5 %, preferably less than 3.8 % and particularly preferably less than 2.5 % based on the total area of the film (10).

9. Film according to any of the preceding claims, **characterised in that** the second sealing regions (22) selectively provide only for inner-outer sealing.

## Revendications

1. Film enroulable (10) servant à former un emballage, de préférence pour produits alimentaires, avec des plages de scellage (21, 22) sur au moins des parties dudit film, dans lequel
le film (10) est formé d'une bande de film multicouche et les plages de scellage (21, 22) d'une face du film présentent des propriétés adhésives différentes,
dans lequel plus précisément les plages de scellage (21, 22) présentant des propriétés adhésives différentes sont définies par des premières plages de scellage (21), scellables entre elles-mêmes en mode extérieur-extérieur et non adhérentes à la face intérieure, et des deuxièmes plages de scellage (22), scellables en mode intérieur-extérieur,
***caractérisé* en ce que**
les premières plages de scellage (21) présentent une épaisseur supérieure à celle des secondes plages de scellage (22) et **en ce qu'**elles sont agencées sur la face du film de telle façon qu'elles viennent se positionner l'une sur l'autre lorsque le film est enroulé et forment la bande de film dans la direction transversale du profil principal de support de telle sorte que, lorsque la bande de film est enroulée, la face supérieure d'une courbure inférieure de la bande de film, dans la zone des sections de bande de film formées par les deuxièmes plages de scellage (22), n'atteint pas de manière directe ou bien seulement avec une pression de surface notablement réduite la face inférieure d'une courbure supérieure de la bande de film.

2. Film enroulable (10) servant à former un emballage, de préférence pour produits alimentaires, avec des plages de scellage (21, 22) sur au moins des parties dudit film, dans lequel
le film (10) est formé d'une bande de film multicouche et les plages de scellage (21, 22) d'une face du film présentent des propriétés adhésives différentes,
dans lequel plus précisément les plages de scellage (21, 22) présentant des propriétés adhésives différentes sont définies par des premières plages de scellage (21), scellables entre elles-mêmes en mode extérieur-extérieur et non adhérentes à la face intérieure, et des deuxièmes plages de scellage (22), scellables en mode intérieur-extérieur,
***caractérisé* en ce que**
les premières plages de scellage (21) sont plus étendues que les deuxièmes plages de scellage (22), dans lequel les premières plages de scellage (21) comportent un vernis de dispersion à base d'acrylate, et/ou les deuxième plages de scellage (22) comportent un vernis de dispersion à base d'éthylène vinyle acétate.

3. Film selon la revendication 1 ou 2,
***caractérisé* en ce que**
les premières plages de scellage (21) sont agencées sensiblement le long de l'extension longitudinale du film (10), notamment de la nappe de film, et **en ce que** les secondes plages de scellage (22) sont agencées dans une région du film (10) où, notamment à l'état enroulé, elles ne chevauchent pas les premières plages de scellage (21 ) vu en coupe transversale du rouleau.

4. Film selon l'une quelconque des revendications 1 ou 3, lorsqu'elle dépend de la revendication 1,
***caractérisé* en ce que**
les premières plages de scellage (21) comportent un vernis de dispersion, notamment à base d'acrylate.

5. Film selon l'une quelconque des revendications 1 ou 3, lorsqu'elle dépend de la revendication 1,
***caractérisé* en ce que**
les deuxièmes plages de scellage (22) comportent un vernis de dispersion, notamment à base d'éthylène vinyle acétate.

6. Film selon l'une quelconque des revendications 1 ou 3 à 5, lorsqu'elles dépendent de la revendication 1,
***caractérisé* en ce que**
les premières plages de scellage (21) sont plus étendues que les deuxièmes plages de scellage (22).

7. Film selon l'une quelconque des revendications précédentes,
***caractérisé* en ce que**
les premières plages de scellage (21) sont recouvertes de peinture, vernis, notamment de vernis structuré et/ou d'un agent anti-adhérent pour éviter un scellage intérieur-extérieur.

8. Film selon l'une quelconque des revendications 1 à 7,
***caractérisé* en ce que**
les deuxièmes plages de scellage (22) couvrent moins de 5% de la surface totale du film (10), de préférence moins de 3,8% et idéalement moins de 2,5%.

9. Film selon l'une quelconque des revendications précédentes,
***caractérisé* en ce que** les secondes plages de scellage (22) scellent de manière sélective uniquement en mode intérieur-extérieur.
